# EUROPÄISCHE PATENTSCHRIFT

(11) **EP 0 560 921 B1**
(45) Veröffentlichungstag und Bekanntmachung des Hinweises auf die Patenterteilung: **24.08.1994**
(21) Anmeldenummer: 92902581.5
(22) Anmeldetag: 15.11.1991
(51) Int. Cl.: G01M 15/00

(54) **VERFAHREN ZUM ERKENNEN VON ANORMALEN VERBRENNUNGEN IN EINEM ZYLINDER EINER BRENNKRAFTMASCHINE**
PROCESS FOR RECOGNIZING ABNORMAL COMBUSTION IN A CYLINDER OF AN INTERNAL COMBUSTION ENGINE
PROCEDE DE RECONNAISSANCE DE COMBUSTION ANORMALE DANS UN CYLINDRE D'UN MOTEUR A COMBUSTION INTERNE

(30) Priorität: 03.12.1990 EP 90123132
(43) Veröffentlichungstag der Anmeldung: 22.09.1993
(73) Patentinhaber: SIEMENS AKTIENGESELLSCHAFT, 80333 München (DE)
(72) Erfinder: ANGERMEIER, Anton, D-8300 Landshut (DE); WIER, Manfred Dr., D-8411 Wenzenbach (DE)
(86) Internationale Anmeldenummer: EP9102157
(87) Internationale Veröffentlichungsnummer: WO9209875

(56) Entgegenhaltungen:
- DE-A- 2 507 138
- FR-A- 2 301 691
- US-A- 4 697 561

## Beschreibung

Die Erfindung betrifft ein Verfahren zum Erkennen von anormalen Verbrennungen in einem Zylinder einer Brennkraftmaschine gemäß Oberbegriff von Anspruch 1.

Aus der US-PS 4 697 561 ist ein Verfahren bekannt, bei dem die Drehzahlen für jeden Zylinder während seines Arbeitstakts an den Kurbelwellenstellungen erfaßt werden, an denen die Kurbelwelle die kleinste bzw. größte Geschwindigkeit hat. Die Differenz zwischen diesen beiden Drehzahlen ist ein Maß für das vom Zylinder erzeugte Drehmoment. Bezogen auf das gemittelte Drehmoment aller Zylinder ergibt sich daraus eine Angabe über die Leistungsfähigkeit des betrachteten Zylinders, die zu Diagnosezwecken herangezogen wird.

Die Kurbelwellenstellungen mit der kleinsten und größten Kurbelwellengeschwindigkeit müssen bei diesem Verfahren experimentell am Motorenprüfstand bestimmt werden. Sie sind insbesondere last- und drehzahlabhängig und werden in dieser Abhängigkeit in dem Steuergerät zur Durchführung des Verfahrens abgespeichert.

Entsprechende Versuche am Motorenprüfstand haben ergeben, daß es schwierig ist diese Kurbelwellenstellungen festzulegen. Insbesondere für die Zwecke der Diagnose von anormalen Verbrennungen konnten in bestimmten Last- und Drehzahlbereichen keine Kurbelwellenstellungen gefunden werden, die ein ausreichend gut auswertbares Geschwindigkeitsdifferenzsignal ergeben hätten.

Die Aufgabe der vorliegenden Erfindung besteht daher darin, das Verfahren derart weiterzubilden, daß die Auswertbarkeit verbessert wird.

Die erfindungsgemäße Lösung ist im Anspruch 1 gekennzeichnet. Vorteilhafte Weiterbildungen der Erfindung finden sich in den Unteransprüchen.

Die Erfindung geht von der Erkenntnis aus, daß die Auswertungsprobleme aus der Wahl der Optimierungsstrategie für die Kurbelwellenstellungen resultieren. Beim Stand der Technik werden diejenigen Kurbelwellenstellungen gesucht, an denen die Kurbelwelle die kleinste, bzw. größte, Geschwindigkeit hat.

Diese Kurbelwellenstellungen werden im normalen Betrieb der Brennkraftmaschine ermittelt, so daß sich eine Aussage über das von ihr erzeugte Drehmoment ableiten läßt. Im Falle von in bestimmten Last- und Drehzahlbereichen stark auftretenden Störungen reicht aber oft die ermittelte Drehzahldifferenz an den beiden Kurbelwellenstellungen nicht mehr aus.

Erfindungemäß wird daher diese Drehzahldifferenz vergrößert, indem die Kurbelwellenstellungen nicht für den Fall des Normalbetriebs optimiert sind, sondern für den Fall einer anormalen Verbrennung. Insbesondere die zweite Kurbelwellenstellung wird dabei später gewählt, als dies dem Punkt der größten Kurbelwellengeschwindigkeit im Normalbetrieb entsprechen würde.

Die Erfindung wird anhand der Zeichnungen näher erläutert.
Dabei zeigen:
- Figur 1: ein vereinfachtes Blockschaltbild einer Anordnung zur Durchführung des Verfahrens,
- Figur 2: einen Geschwindigkeitsverlauf der Kurbelwelle einer Brennkraftmaschine zur Veranschaulichung des Verfahrens und
- Figur 3: ein Flußdiagramm zur Durchführung des Verfahrens.

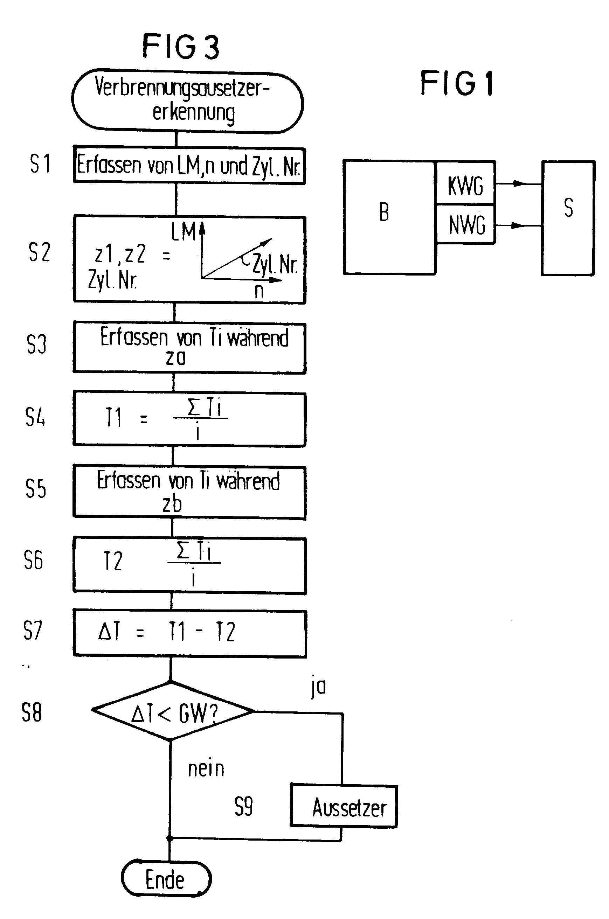

Figur 1 zeigt eine Brennkraftmaschine B mit einem Kurbelwellengeber KWG und einem Nockenwellengeber NWG. Der Kurbelwellengeber tastet ein mit der Kurbelwelle verbundenes Zahnrad ab, das eine Bezugsmarke sowie eine Vielzahl von Zähnen aufweist. Als Ausgangssignal liefert der Kurbelwellengeber KWG jeweils einen Impuls pro Zahn sowie einen davon unterscheidbaren Bezugsimpuls bei der Bezugsmarke. Dieses Ausgangssignal wird einem Steuergerät S zugeleitet, das durch Zählen der Impulse einerseits die Stellung der Kurbelwelle innerhalb einer 360° Drehung bestimmt und andererseits durch die zeitliche Abfolge der Impulse pro Zeit die Drehzahl ermittelt.

Der Nockenwellengeber NWG tastet ein mit der Nockenwelle verbundenes Zahnrad ab, das über die eine Hälfte seines Umfangs einen Zahn und über die andere Hälfte seines Umfangs eine Lücke aufweist. Das Ausgangssignal des Nockenwellengebers NWG hat zwei Zustände, je nachdem ob dem Nockenwellengeber NWG gerade der Zahn oder die Lücke gegenüber steht. Das Steuergerät S bestimmt mit diesem Ausgangssignal zusammen mit dem Ausgangssignal des Kurbelwellengebers KWG die Zylinderzuordnung und den Kurbelwellenwinkel. Ein Nockenwellengeber NWG wird gebraucht, da z.B. bei einem 6-Zylinder-Motor eine Periodizität von jeweils zwei Umdrehungen vorliegt und daher die Stellung der Kurbelwelle alleine noch nicht für eine eindeutige Zuordnung in Zündreihenfolge ausreicht.

Das Steuergerät S hat im wesentlichen die Aufgabe die Zündung und Einspritzung für die Brennkraftmaschine B zu steuern sowie diverse Diagnosefunktionen zu übernehmen. Dazu sind an dem Steuergerät S verschiedene hier nicht dargestellte Sensoren und Aktoren angeschlossen. Ein solches Steuergerät S stellt also eine übliche Motorsteuerung dar, wie sie heutzutage in einer Vielzahl von Fahrzeugen bereits verwirklicht ist.

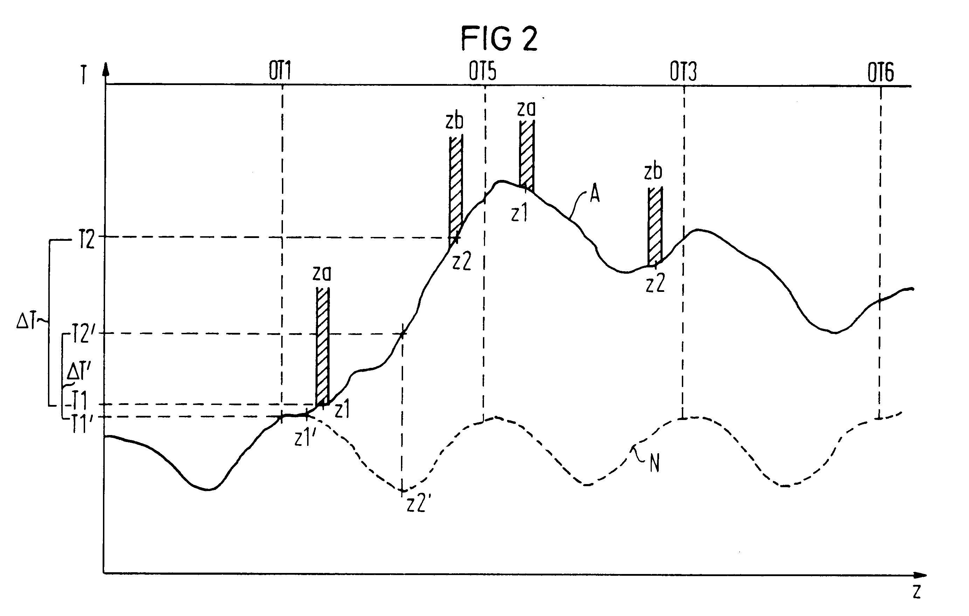

Eine von dem Steuergerät S ausgeführte Diagnosefunktion ist das Erkennen von irregulären Verbrennungen in einem der Zylinder der Brennkraftmaschine B. Zur Veranschaulichung ist im Diagramm der Figur 2 die reziproke Drehzahl T der Kurbelwelle über der Kurbelwellenstellung z aufgetragen. Die reziproke Drehzahl wurde gewählt, weil ein dementsprechendes Signal in dem Steuergerät S bereits vorliegt. Gegenüber einer Betrachtung der Drehzahl kehren sich damit die Verhältnisse um. Daher bedeutet also eine ansteigende Flanke eine Verlangsamung und eine abfallende Flanke eine Beschleunigung der Kurbelwelle. Eine Normalkurve N gibt diesen Verlauf für den normalen Betrieb der Brennkraftmaschine B wieder. Der sinusartige Verlauf resultiert aus den verschiedenen Arbeitstakten der Brennkraftmaschine B, wobei die einzelnen Beschleunigungsphasen jeweils nach der Zündung eines Zylinders während seines Arbeitstakts liegen. In Figur 2 sind beispielhaft gemäß der Zündfolge bei einem 6-Zylinder-Motor die oberen Totpunkte der Zylinder 1, 5, 3, 6 eingezeichnet.

Die Verhältnisse die auftreten, wenn beim Arbeitstakt eines Zylinders keine ordnungsgemäße Zündung und Verbrennung des Gemischs stattfinden sind in Figur 2 für den Zylinder 1 dargestellt. Eine Aussetzerkurve A gilt für den Fall, daß überhaupt keine Verbrennung stattfindet. Die Kurbelwelle wird demgemäß nicht beschleunigt, sondern durch die Widerstände der Maschine weiter verlangsamt. Erst nach der Zündung des nächstfolgenden Zylinders 5 mit einer ordnungsgemäßen Verbrennung wird die Kurbelwelle dann wieder beschleunigt.

Das erfindungsgemäße Verfahren zum Erkennen solcher anormalen Verbrennungen wird anhand des Flußdiagramms der Figur 3 beschrieben. Ein entsprechendes Programm ist in einer Diagnoseroutine des Steuergerätes S abgelegt und wird laufend für jeden Zylinder durchgeführt.

Bezogen auf den jeweiligen oberen Totpunkt eines Zylinders werden dazu zwei Kurbelwellenstellungen zl, z2 festgelegt. Diese Kurbelwellenstellungen z1, z2 liegen üblicherweise nach dem oberen Totpunkt, sind last- und drehzahlabhängig verschieden und werden durch Versuche optimiert. Wesentlich dabei ist, daß für die Optimierung nicht der Normalfall gemäß der Normalkurve N herangezogen wird, sondern der Fall einer anormalen Verbrennung, im Beispiel der Verbrennungsaussetzerfall gemäß der Aussetzerkurve A.

Im Schritt S1 der Figur 3 werden die Luftmasse LM, die Drehzahl n und die Zylindernummer desjenigen Zylinders erfaßt, der als nächster seinen oberen Totpunkt erreicht. Diese Größen werden auch für die Zwecke der Zündzeitpunkt und Einspritzzeitberechnung gebraucht, so daß sie im Steuergerät S bereits vorliegen und aus den entsprechenden Programmroutinen übernommen werden können.

Im Schritt S2 werden dann aus entsprechenden Kennfeldern die Kurbelwellenstellungen z1, z2 abhängig von der Luftmasse LM, der Drehzahl n und der Zylindernummer entnommen. Die zylinderspezifische Abhängigkeit über die Zylindernummer ist nötig, um das Schwingungsverhalten der Kurbelwelle zu berücksichtigen.

Um Störeinflüsse zu vermindern werden die entsprechenden reziproken Drehzahlen T1, T2 in den Kurbelwellenstellungen z1 und z2 jeweils nicht nur einmalig erfaßt, sondern in Kurbelwellenstellungsbereichen za, zb um die Kurbelwellenstellugen z1, z2 herum. Aus der Mittelung der dabei jeweils erfaßten i reziproken Drehzahl Ti werden schließlich die reziproken Drehzahlen T1 und T2 gewonnen, die der reziproken Drehzahlen in den beiden Kurbelwellenstellungen z1 und z2 entsprechen. Dieser Vorgang wird in den Schritten S3, S4 bzw. S5, 56 durchgeführt.

Im Schritt S7 erfolgt dann die Berechnung der Differenz Δ T aus den reziproken Drehzahlen T1 und T2. Diese Differenz Δ T ist ein direktes Maß für die bei ordnungsgemäßer Verbrennung bewirkte Beschleunigung der Kurbelwelle.

Unterschreitet daher die Differenz Δ T einn Grenzwert GW so liegt gar keine oder eine mangelhafte Verbrennung vor. Ist dies der Fall, so wird in den Schritten S8 und S9 ein Aussetzer erkannt.

Diese Differenz Δ T ist bei dem erfindungsgemäßen Verfahren deutlich größer als beim Stand der Technik, wodurch die Auswertung einfacher und weniger störanfällig wird. Zum Vergleich sind in Figur 2 für den aussetzenden Zylinder 1 zwei Fälle dargestellt. Einerseits sind erfindungsgemäß die Kurbelwellenstellungen z1 und z2 auf die Aussetzerkurve A optimiert und andererseits die Kurbelwellenstellungen z1′ z2′ gezeigt, die auf die Normalkurve N optimiert sind. Wie die resultierenden Differenzen Δ T und Δ T′ zeigen, ergibt sich durch die erfindungsgemäße Optimierung auf die Aussetzerkurve A nahezu eine Verdoppelung.

Die Wahl des Grenzwerts GW legt fest, welcher Grad einer anormalen Verbrennung noch erkennbar sein soll. Eine besonders einfache Methode für die Erkennung von vollen Verbrennungsaussetzern wäre z.B. eine reine Vorzeichenbewertung der Differenz ΔT. Am Beispiel der Figur 2 erkennt man, daß im Falle des aussetzenden Zylinders 1 eine negative und im Falle des verbrennenden Zylinders 5 eine positive Differenz ΔT vorliegt.

Für eine genauere Auswertung auch nur leicht anormaler Verbrennungen wird der Grenzwert GW auf einen bestimmten positiven Wert gesetzt. Damit werden auch noch Verbrennungen als anormal erkannt, die zwar einen Beschleunigungsbeitrag liefern, der aber gegenüber dem bei einer normalen Verbrennung unzureichend ist. Eine solche mangelhafte Verbrennung würde einen Kurvenverlauf liefern, der zwischen der Aussetzerkurve A und der Normalkurve N liegt.

## Patentansprüche

1. Verfahren zum Erkennen von anormalen Verbrennungen in einem Zylinder einer Brennkraftmaschine (B),
wobei die Drehzahl der Brennkraftmaschine (B) an zwei Kurbelwellenstellungen (z1, z2) ermittelt wird, die last- und drehzahlabhängig verschieden gewählt sind,
**dadurch gekennzeichnet,**
daß die beiden Kurbelwellenstellungen (z1, z2) so gewählt sind, daß sich bezogen auf den Fall einer anormalen Verbrennung eine möglichst große Drehzahldifferenz ergibt und
daß eine anormale Verbrennung erkannt wird, wenn je nach gewählter Drehzahldifferenz, zeitlich späterer minus zeitlich füherer oder zeitlich früherer minus zeitlich späterer Drehzahlwert, ein Grenzwert (GW) unter bzw. überschritten wird.

2. Verfahren nach Anspruch 1,
**dadurch gekennzeichnet,**
daß die beiden Kurbelwellenstellugen (z1, z2) bezogen auf den Fall eines Verbrennungsaussetzers gewählt werden.

3. Verfahren nach Anspruch 1,
**dadurch gekennzeichnet,**
daß die Drehzahl für jeden Zylinder laufend während zwei Kurbelwellenstellungsbereichen ermittelt wird und daraus jeweils durch Mittelung eine der beiden Drehzahlen gewonnen wird.

4. Verfahren nach Anspruch 1,
**dadurch gekennzeichnet,**
daß der Grenzwert (GW) Null ist und dessen Überschreitung bzw. Unterschreitung aus dem Vorzeichen der Drehzahldifferenz erkannt wird.

5. Verfahren nach Anspruch 1,
**dadurch gekennzeichnet,**
daß die Kurbelwellenstellungen (z1, z2) zylinderspezifisch unterschiedlich gewählt sind.

## Claims

1. Process for recognizing abnormal combustions in a cylinder of an internal-combustion engine (B), the rotational speed of the internal-combustion engine (B) being determined by means of two crankshaft positions (z1, z2) which are selected as different in dependence on load and on rotational speed, characterized in that the two crankshaft positions (z1, z2) are selected so that, in relation to the case of abnormal combustion, as great a rotational-speed difference as possible is obtained, and in that abnormal combustion is recognized when, according to the selected rotational-speed difference, a rotational-speed value later in time minus earlier in time or earlier in time minus later in time, a limit value (GW) is not reached or is exceeded.

2. Process according to Claim 1, characterized in that the two crankshaft positions (z1, z2) are selected in relation to the case of a combustion misfire.

3. Process according to Claim 1, characterized in that the rotational speed for each cylinder is determined continuously over two crankshaft-position ranges and one of the two rotational speeds is obtained respectively from these by averaging.

4. Process according to Claim 1, characterized in that the limit value (GW) is zero and exceeding it or not reaching it is recognized from the sign of the rotational-speed difference.

5. Process according to Claim 1, characterized in that the crankshaft positions (z1, z2) are selected as different in a cylinder-specific manner.

## Revendications

1. Procédé pour identifier des vibrations anormales dans un cylindre d'un moteur à combustion interne (B),
la vitesse de rotation du moteur à combustion interne (B) étant déterminée en deux positions (z1, z2) du vilebrequin, qui sont choisies différemment en fonction de la charge et de la vitesse de rotation,
caractérisé par le fait
que les deux positions (z1, z2) du vilebrequin sont choisies de telle sorte que, par rapport au cas d'une combustion anormale, on obtient une différence aussi grande que possible des vitesses de rotation, et
qu'une combustion anormale est identifiée lorsque, respectivement en fonction d'une différence choisie des vitesses de rotation, à savoir une valeur ultérieure de la vitesse de rotation moins une valeur antérieure de la vitesse de rotation ou une valeur antérieure de la vitesse de rotation moins une valeur ultérieure de la vitesse de rotation, une valeur limite (GW) est dépassée par valeurs inférieures ou par valeurs supérieures.

2. Procédé suivant la revendication 1, caractérisé par le fait que les positions (z1, z2) du vilebrequin sont choisies d'une manière rapportée au cas d'un raté de combustion.

3. Procédé suivant la revendication 1, caractérisé par le fait que la vitesse de rotation est déterminée en permanence pour chaque cylindre sur deux zones de positions du vilebrequin et l'une des deux vitesses de rotation est obtenue à partir de là, respectivement par formation de la moyenne.

4. Procédé suivant la revendication 1, caractérisé par le fait que la valeur limite (GW) est nulle et que son dépassement par valeurs supérieures ou par valeurs inférieures est identifié au signe de la différence entre les vitesses de rotation.

5. Procédé suivant la revendication 1, caractérisé par le fait que les positions (z1, z2) du vilebrequin sont choisies différentes d'une manière spécifique au cylindre.
